# EUROPEAN PATENT APPLICATION

(11) **EP 2 343 673 A2**
(43) Date of publication of application: **13.07.2011**
(21) Application number: 10197117.4
(22) Date of filing: 28.12.2010
(51) Int. Cl.: G06K 19/077, G06K 19/07

(54) **Document incorporating an RFID device and manufacturing method thereof**

(30) Priority: 30.12.2009 IT MO20090318
(71) Applicant: Lolli, Marcello, 41051 Castelnuovo Rangone (MO) (IT)
(72) Inventor: Lolli, Marcello, 41051 Castelnuovo Rangone (MO) (IT)
(74) Representative: Crugnola, Pietro

(57) **Abstract**

A method for making a document (7) with an RFID device (10) on a UHF band associated therewith, that comprises the following steps:
- providing a substratum (8; 18) intended for constituting the body of at least one document (7);
- applying to an external face (9) of said substratum (8; 18) at least one RFID device (10) on a UHF band comprising a supporting element (11) on a first face of which there is an antenna (12) connected to a microchip (13), said applying occurring in such a manner that said RFID device (10) after being applied to said substratum (8; 18) is covered by said supporting element (11).
A document (7) with an RFID device (10) on a UHF band associated therewith, said document (7) comprising a substratum (8; 18), said RFID device (10) is applied to an external face (9) of said substratum (8; 18).
An RFID device (10) on a UHF band comprising a supporting element (11), on a first face of which an antenna (12) connected to a microchip (13) is applied, and a possible covering element (14) of said antenna (12) and of said microchip (13), on a second face of said supporting element (11) opposite said first face, or on said covering element (14), the graphic elements are printed.

## Description

The present invention relates to a document incorporating an RFID device therein, in particular a ticket to be used to enter, for example, a museum, a fair or sporting event, a metro station, etc, by showing the ticket to a remote reading device, without contact, that reads the data stored in the RFID device and permits the entry of the possessor of the ticket.

In the prior art, tickets are known that are provided with an RFID device incorporated therein, which are made by laminating between two layers of paper or plastics, an insert formed by an antenna made of engraved metal to which the chip has been applied, the antenna and microchip assembly constituting the RFID device.

Another manufacturing technique provides making the antenna by printing the antenna with a conductive ink on a support of paper, or of plastics, to which the microchip is then applied, connecting the microchip to the antenna. The support with the antenna and the microchip is then laminated with a layer of paper, or of plastics to obtain the finished ticket.

Known manufacturing methods have some drawbacks.

As the tickets are generally printed on both faces, two separate printing processes are required, one for each part of the ticket and subsequently the parts of the ticket have to be coupled by aligning the parts of the ticket precisely, i.e. "in register", to make the front and the back of the ticket match, just as the device incorporated inside must be registered.

All this makes the manufacturing process complex and costly. An object of the present invention is to eliminate the aforesaid drawbacks.

The object of the invention is achieved with a method for making a document with an RFID device associated therewith according to claim 1 and with a document with RFID device associated therewith according to claim 10.

Owing to the invention, it is possible to make a document with an incorporated RFID device that may also consist of even a single layer of paper or of plastics, and does not require operations of lamination and precision alignment of two layers of paper or of plastics, in addition to the RFID device, it being further possible to make prints on two faces of the document with a single printing operation. Making the document is thus much simpler, cheaper and faster than making documents with an incorporated microchip according to known methods of the prior art.

The invention can be better understood and implemented by the description that follows with reference to the attached drawings in which:
Figure 1 is an embodiment of a document with an incorporated RFID device, according to the prior art;
Figure 2 is an embodiment of a document with an RFID device according to the invention;
Figures 3 and 4 show an insert with an RFID device that is incorporable into a document according to the invention;
Figure 5 is a cross section of the insert illustrated in
Figures 3 and 4;

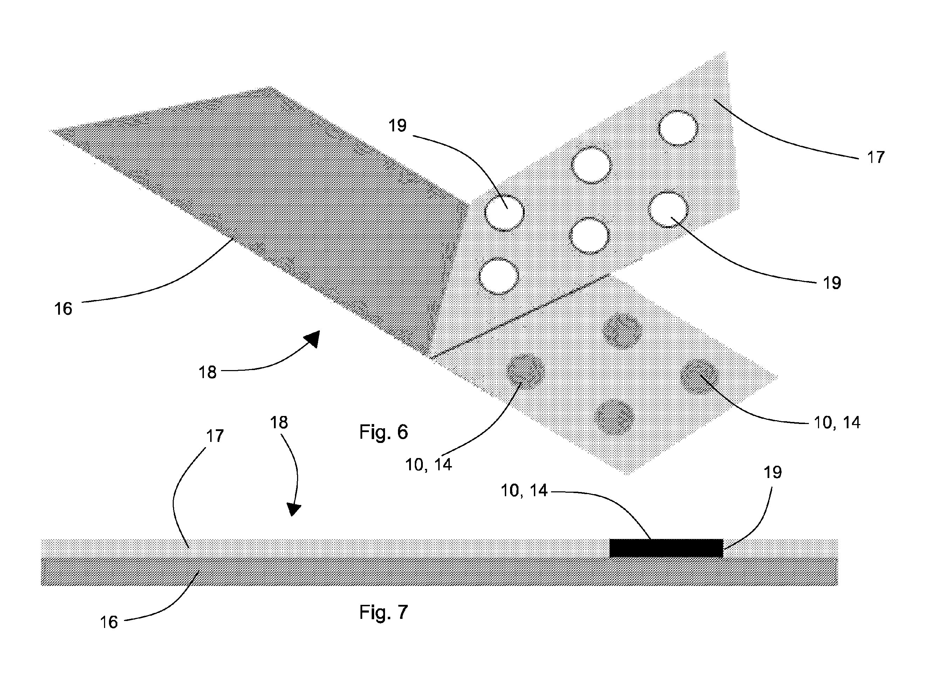

Figure 6 shows a perspective view of a semifinished product that is usable in making a document with an incorporated RIFD device according to the invention;
Figure 7 is a longitudinal section of the semifinished product shown in Figure 6.

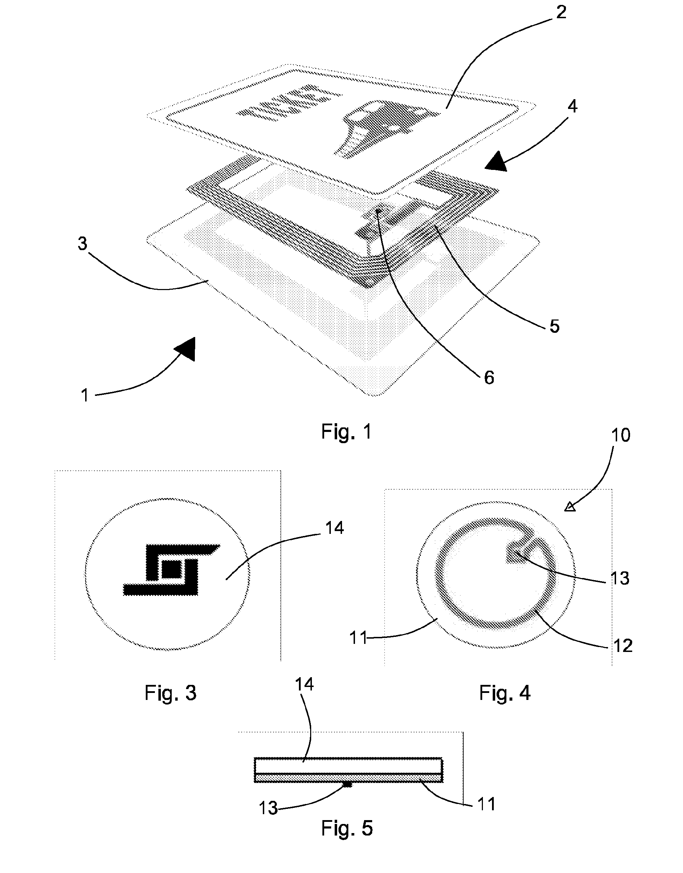

In Figure 1 a ticket 1 according to the prior art is shown, with an RFID device 4 incorporated therein. The ticket 1 consists of a first layer 2, of paper or plastics, and of a second layer 3, of paper or plastics, between which the RFID device 4 is inserted that consists of an antenna 5 connected to a microchip 6.

The first layer 2, the second layer 3 and the RFID device 4 are laminated together, to obtain the ticket 1.

This lamination operation involves the need to align together with precision the first layer 2, the second layer 3 and the RFID device to prevent defective alignment in the subsequent cutting operation being able cause the RFID device of the ticket 1 to be destroyed or the front and back images not to be aligned.

The lamination operation thus has a significant impact on the production costs of the ticket 1.

Further, if both faces of the ticket 1 are intended to be printed, two printing operations are necessary, a first printing operation to print the face of the layer 1 intended to face the exterior of the finished ticket 1 and a second printing operation to print the face of the layer 2 intended to face the exterior of the finished ticket 2.

Also this dual printing operation contributes to increasing the production costs of the ticket 1.

Currently, in most applications RFID devices on a UHF band are used that are progressively replacing RFID devices on an HF band.

The RFID devices on a UHF band, compared with the RFID devices on an HF band, have the advantage of requiring an antenna of very small dimensions, even of just a few millimetres in width or diameter, which enables RFID devices of very small dimensions to be made.

The present invention aims to use this type of RFID device on a UHF band to simplify making documents, for example tickets, or cards, into which an RFID device has been incorporated.

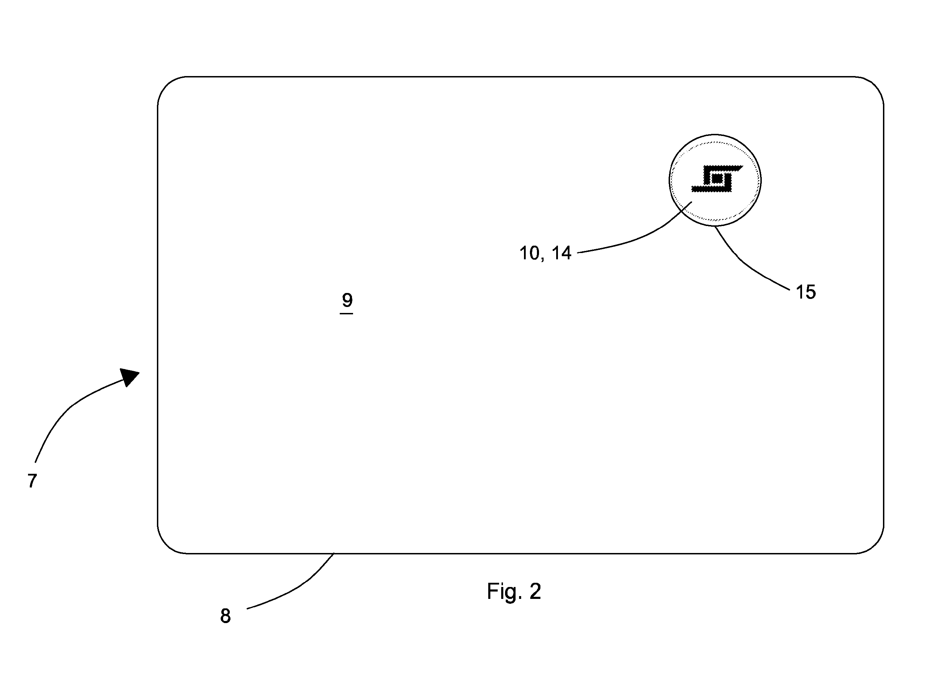

In Figure 2 a document 7 is illustrated that is made according to the present invention.

The document 7, for example a ticket or a card, consists of a substratum 8 made from a single layer of paper or plastics, said substratum constituting the body of the document 7. The substratum 8 can be printed beforehand on both sides, for example with decorative patterns, images, or wordings. On an external face 9 of the substratum 8 an RFID device 10 on a UHF band is applied, for example by heat transfer or gluing, the RFID device 10 on a UHF band consisting of an antenna 12 connected to a microchip 13 and applied, together with the microchip 13, to a supporting element 11, or formed thereupon and then connected to the microchip 13. The RFID device 10, after being applied to the face 9 of the substratum 8, can be covered with a covering element 14, which may consist of a hologram, or a lamina, or a film, or an image, for example a logo, which are applied, for example, by heat transfer or pressure, or by any other known transfer technique. Alternatively, the covering element 14 may consist of a print element made, for example, by silkscreen printing after the RFID device 10 has been applied to the substratum 8.

Alternatively, the supporting element 11 may act as a covering element, applying the RFID device 10 to the substratum 8, in such a manner that the face of the supporting element 11 to which the RFID device 10 is applied faces the substratum 8. In this case, the face of the supporting element 11 opposite the one on which the RFID device 10 is applied can be provided with printing graphic elements.

The RFID device 10 with any possible covering element 14, if it is applied directly to the surface of the substratum 8, protrudes slightly therefrom and can cause stacking difficulties and be exposed to undesired stress, for example, if the document 7 is inserted into pocket of a document holder by sliding the document 7 against the walls of the pocket, which could lead to the RFID device 10 being damaged.

This problem, as illustrated in Figure 4, can be solved, in the case of a document made of plastic material, by making a recess 15 beforehand on the face 9 of the substratum 8, to which the RFID device 10 has to be applied, the recess 15 being made for example by milling, into which the RFID device 10 is inserted, together with the possible covering element 14. The depth of the recess 15 has to be such that the RFID device 10, with the supporting element 11 and with the possible covering element 14, does not protrude from the surface of the face 9. In other words, the depth of the recess 15 has to correspond substantially to the sum of the thicknesses of the RFID device 10, of the supporting element 11 and of the possible covering element 14, such that the assembly consisting of the RFID device 10, the supporting element 11 and the possible covering element 14 does not protrude from the surface of the face 9 after being inserted into the recess 15.

In the case of a document made of paper material it is advantageous to make the document with two layers of paper material, in one of which an opening is made intended for receiving the RFID device 10 with the supporting element 11 and the possible covering element 14.

In Figures 6 and 7 making a document 7 according to the aforesaid method is illustrated.

A first layer 16 and a second layer 17, made of paper material, are coupled together, which each have dimensions that are substantially equal to a multiple of the dimensions of a single document 7, obtaining a substratum 18 made of sheet paper material, by means of which a plurality of documents 7 will be made that will be subsequently separated from one another singly, or in a roll or in a pack.

The layers 16 and 17 can be preprinted on the faces thereof that are intended to be visible after they have been coupled together to obtain the substratum 18, or it is possible to print the substratum 18 after coupling, possibly on both sides. On the first layer 16, or on the second layer 17, holes 19 are provided that, after coupling of the second layer 17 with the first layer 16, define seats into which the RFID devices 10 can be inserted, with the supporting elements 11 thereof and the possible cover elements 14. The thickness of the layer 16, or 17, in which the holes 19 are made, is chosen substantially according to the sum of the thicknesses of the RFID device 10, of the supporting element 11 and of the possible covering element 14, such that the RFID devices 10, with the respective supporting elements 11 and possible cover elements 14, after being inserted into the holes 10, do not protrude from the surface of the substratum 18.

After the devices RFID 10 have been inserted into the holes 19 and the respective cover elements 14 have been possibly applied thereupon, the substratum 18 is cut to be divided into parts to obtain a plurality of documents 7, singly or in a roll or in a pack, each with a respective RFID device 10 incorporated therein.

Instead of using layers of 16, 17 made of paper material that have dimensions that are multiples of the dimensions of one document 7 it is possible to use layers of paper material having dimensions that are equal to the dimensions of the documents 7 so as to make the documents 7 singly.

## Claims

1. Method for making a document (7) with an RFID device (10) on a UHF band associated therewith, **characterised in that** it comprises the following steps:
- providing a substratum (8; 18) intended for constituting the body of at least one document (7);
- applying to an external face (9) of said substratum (8; 18) at least one RFID device (10) on a UHF band comprising a supporting element (11) on a first face of which there is an antenna (12) connected to a microchip (13), said applying occurring in such a manner that said RFID device (10), after being applied to said substratum (8; 18), is covered by said supporting element (11).

2. Method according to claim 1, further comprising printing graphic elements on a second face of said supporting element (11) opposite said first face, said printing occurring before said applying.

3. Method according to claim 1, further comprising covering said at least one RFID device (10) with a respective covering element (14), said covering element (14) being able to consist of printed graphic elements, or of a lamina, a hologram or a film, which may be printed before said covering.

4. Method according to claim 3 in which said covering element (14) is applied by transfer.

5. Method according to any preceding claim, wherein said substratum (8) is made of plastic material.

6. Method according to claim 5, and further comprising making on a face (9) of said substratum (8) a recess (15) intended for housing said RFID device (10), said recess having a thickness corresponding at least to the sum of the thicknesses of said RFID device (10) and of said supporting element (11).

7. Method according to claim 6, as appended to claim 3, or 4, wherein said recess (15) has a depth substantially corresponding to the sum of the thicknesses of said RFID device (10), of said supporting element (11) and of said covering element (14).

8. Method according to any one of claims 1 to 4, wherein said substratum (18) is made of paper material.

9. Method according to claim 5, or 8, and further comprising:
- making said substratum (18) coupling together a first layer (16) and a second layer (17) of said material, said first layer (16), or said second layer (17), being provided with a plurality of holes (19);
- inserting into each of said holes (19) an RFID device (10) with the respective supporting element (11).

10. Method according to claim 9, and further comprising inserting into each of said holes (19) a respective covering element (14) of said RFID device (10).

11. Document (7) with an RFID device (10) on a UHF band associated therewith, said RFID device (10) comprising a supporting element (11) on a first face of which there is an antenna (12) connected to a microchip (13), said document (7) comprising a substratum (8; 18), **characterised in that** said RFID device (10) is applied to an external face (9) of said substratum (8; 18) such as to be covered by said supporting element (11).

12. Document (7) according to claim 11, wherein on a second face of said supporting element (11) opposite said first face graphic printing elements are printed.

13. Document (7) according to claim 11, further comprising a covering element (14) that covers said RFID device (10), said covering element (14) being able to consist of printed graphic elements, or of a lamina, a hologram or a film, which is possibly printed.

14. Document (7) according to any one of claims 11 to 13, wherein said substratum (8) is made of plastic material and said face (9) is provided with a recess (15) intended for housing said RFID device (10) with said supporting element (11) and possibly said covering element (14).

15. Document (7) according to any one of claims 11 to 13, wherein said substratum comprises a first layer (16) and a second layer (17) made of plastic or paper material, coupled together, said first layer (16), or said second layer (17), being provided with a hole (19) intended for housing said RFID device (10) with said supporting element (11) and possibly said covering element (14).

16. RFID device (10) on a UHF band comprising a supporting element (11), on a first face of which an antenna (12) is applied that is connected to a microchip (13), and a possible covering element (14) of said antenna (12) and of said microchip (13), **characterised in that** on a second face of said supporting element (11) opposite said first face, or on said covering element (14), graphic elements are printed, said covering element being able to consist of a lamina, a hologram, or a film.
